# EUROPEAN PATENT APPLICATION

(11) **EP 2 423 132 A1**
(43) Date of publication of application: **29.02.2012**
(21) Application number: 10766966.5
(22) Date of filing: 09.04.2010
(51) Int. Cl.: B65G 15/30, B65G 15/02

(54) **CONVEYOR BELT**

(30) Priority: 24.04.2009 JP 2009106942
(71) Applicant: Nitta Corporation, Osaka-shi, Osaka 556-0022 (JP)
(72) Inventor: YUASA Kazuyuki, Yamatokoriyama-shi Nara 639-1085 (JP)
(74) Representative: Schaumburg, Thoenes, Thurn, Landskron, Eckert
(86) International application number: PCT/JP2010/056422
(87) International publication number: WO 2010/122908

(57) **Abstract**

Ends 14A and 14B of a belt body 14 are detachably joined together by a first slide fastener 21 so that a curved conveyor belt 13 forms an endless loop. The outer circumferential edge of the curved conveyor belt 13 can be separated as a detachable belt edge 15. A bead 26 extending along the outer circumferential edge of the belt is mounted to the detachable belt edge 15. The detachable belt edge 15 is detachably attached to the belt body 14 by a second slide fastener 22

## Description

### TECHNICAL FIELD

The present invention relates to a conveyor belt in which both belt ends or a belt body and a bead member can be detachably joined together.

### BACKGROUND ART

In the method for processing a curved conveyor belt into an endless loop, it is general method that both belt ends are bonded with an adhesive by thermal compression, or the material of the belt itself is made to be thermoplastic resin and both belt ends are fusion-bonded. Furthermore, Patent Citation 1 discloses the method which includes providing a coiled fastener element on each of both belt ends; engaging these fastener elements from the vertical direction; and inserting a connection core wire into the common holes formed by the engagement so as to join both ends of the collector screen.

Moreover, it is known in the curved conveyor belt that a bead is provided on an outer circumferential edge of the belt and the bead is pinched by a holder so as to correct the running position thereof. Conventionally, the bead is bonded onto the outer circumferential edge of the belt with an adhesive or is sewn thereto.
Patent Citation 1: JAPANESE UNEXAMINED PATENT PUBLICATION (KOKAI) No.2002-309473

### DISCLOSURE OF INVENTION

### TECHNICAL PROBLEM

The methods of bonding both belt ends by either thermal compression or fusion require technique or skill and therefore they are not easily conducted by an end-user; moreover they also cause the problem of reducing productivity due to consuming much time. Furthermore, the curved conveyor belt is attached to a conveyor apparatus while it is supported by a support plate that is located on a back side of the belt, and therefore, the attachment and the detachment of the endless belt, whose both ends are bonded, are not easy.

On the other hand, the method of Patent Citation 1 does not require the technique and skill, but in case of a wide belt such as the curved conveyor belt and so on, it is difficult to insert the connection core wire into the common holes, and therefore, applying it to the curved conveyor belt is not practical. Moreover, since the joining part is supported by the connection core wire only, the strength of the joining part tends to. decrease.

Moreover, the bead may be broken before the belt body in the conveyor belt; however, in this case, not only the bead but also the whole belt should be exchanged conventionally.

Therefore, the present invention is created in light of the above problems and the object of the present invention is to provide a conveyor belt in which both belt ends can be easily connected and separated and also provide a conveyor belt in which only the bead can be easily exchanged.

### TECHNICAL SOLUTION

A conveyor belt in the present invention is **characterized in that** the belt ends are detachably joined together by a first slide fastener so that the conveyor belt is formed into an endless loop.

For example, the conveyor belt comprises a bead that extends along an edge of the belt. In this case, it is preferable that one end of the bead is configured to protrude from one belt end and attach to the edge of the other belt end. Furthermore, one end of the bead is preferably arranged contiguous to the other end of the bead.

It is preferable that one end of the bead is detachably attached to the belt edge of the other belt end by a button. It is preferable that one end section of the bead is U-shaped in form, and the belt edge of the other belt end is disposed inside of the U-shape. Furthermore, in this specification, the term "button" includes a snap.

It is preferable that the conveyor belt comprises a belt body of which the ends are detachably joined together by the first slide fastener, and the bead is detachably attached to the belt body by a second slide fastener. For example, the conveyor belt is a curved conveyor belt.

A conveyor belt of the other embodiment in the present invention is **characterized in that** it comprises a belt body and a bead that extends along an edge of the belt body, and the bead is detachably attached to the belt body by a slide fastener.

### ADVANTAGEOUS EFFECTS

In the present invention, since it is easy to connect and separate both ends of the conveyor belt, the belt can be easily attached and detached to the conveyor apparatus. Moreover, when the bead is broken before the belt body, only the bead can be exchanged, unless the belt body is exchanged.

### BRIEF DESCRIPTION OF DRAWINGS

Fig. 1 is a schematic plan view of a conveyor apparatus utilizing a curved conveyor belt in a first embodiment of the present invention.
Fig. 2 is a plan view of the curved conveyor belt of which both ends are separated, viewed from the back surface side in the first embodiment.
Fig. 3 is a cross-section view showing a part of the conveyor apparatus in the first embodiment.
Fig. 4 is a partial perspective view of the curved conveyor belt, viewed from the top surface side in the first embodiment.
Fig. 5 is a partial perspective view of the curved conveyor belt, depicting the mode where both belt ends are joined, viewed from the top surface side in the first embodiment.
Fig. 6 is a plan view of the curved conveyor belt of which both belt ends are separated, viewed from the back surface side in the second embodiment.
Fig. 7 is a partial perspective view of the curved conveyor belt, viewed from the top surface side in the second embodiment.

### EXPLANATION OF REFERENCES

- 10: Conveyor Apparatus
- 13: Curved Conveyor Belt
- 14: Belt Body
- 14A, 14B: End (belt End)
- 15: Detachable Belt Edge
- 21: First Slide Fastener
- 22: Second Slide Fastener
- 26: Bead
- 35: Outer Circumferential Edge of Belt

### EMBODIMENTS FOR CARRYING OUT INVENTION

In the following, embodiments of the present invention will be explained with reference to the drawings.

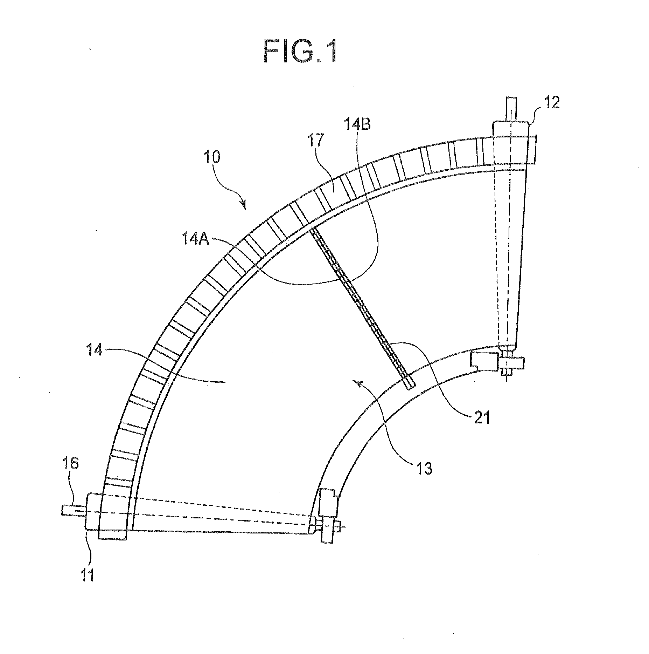

Fig. 1 is a plan view which shows a conveyor apparatus utilizing a curved conveyor belt of an embodiment of the present invention. A drive taper pulley 11 and a driven taper pulley 12, which form a predetermined center angle, are arranged in a conveyor apparatus 10. An endless curved conveyor belt 13 is trained about the drive taper pulley 11 and the driven taper pulley 12 so that the curved conveyor belt 13 is installed and is stretched in a sector form.

The drive taper pulley 11 and the driven taper pulley 12 are rollers of which their diameters get smaller, the closer they are to the center of the sector form of the curved conveyor belt 13. A shaft 16 of the drive taper pulley 11 is connected to a motor (not shown) for example, and the torque is provided by the motor. The driven taper pulley 12 is mounted to the conveyor apparatus 10 so as to freely rotate and does not provide the belt with any substantial drive power.

An outer circumferential edge of the curved conveyor belt 13 is held by a belt holder mechanism 17. In the conveyor apparatus 10, a centripetal force toward the center of the sector form acts on the conveyor belt 13, but the belt holder mechanism 17 prevents the belt 13 from centrally directed displacement during driving.

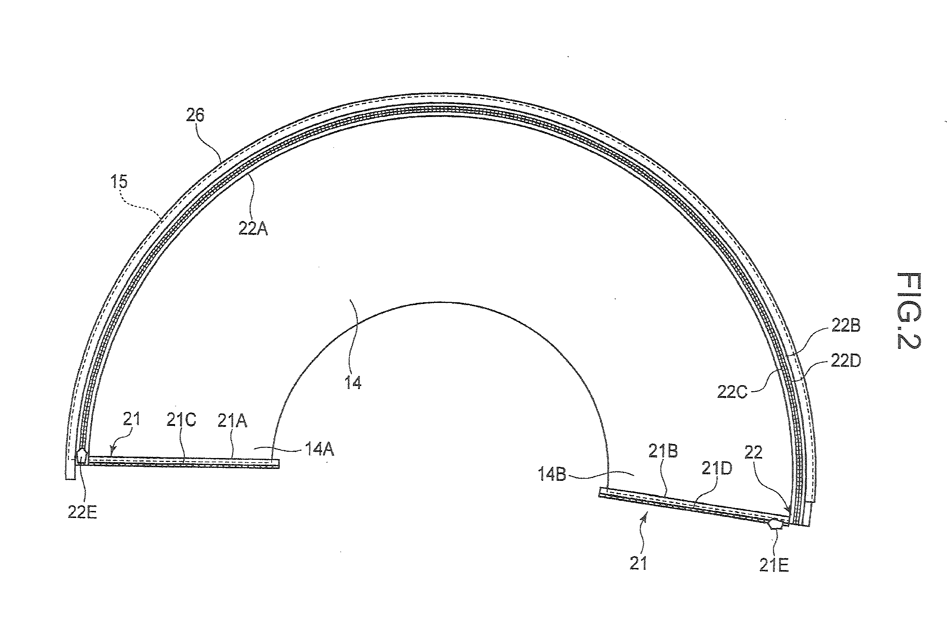

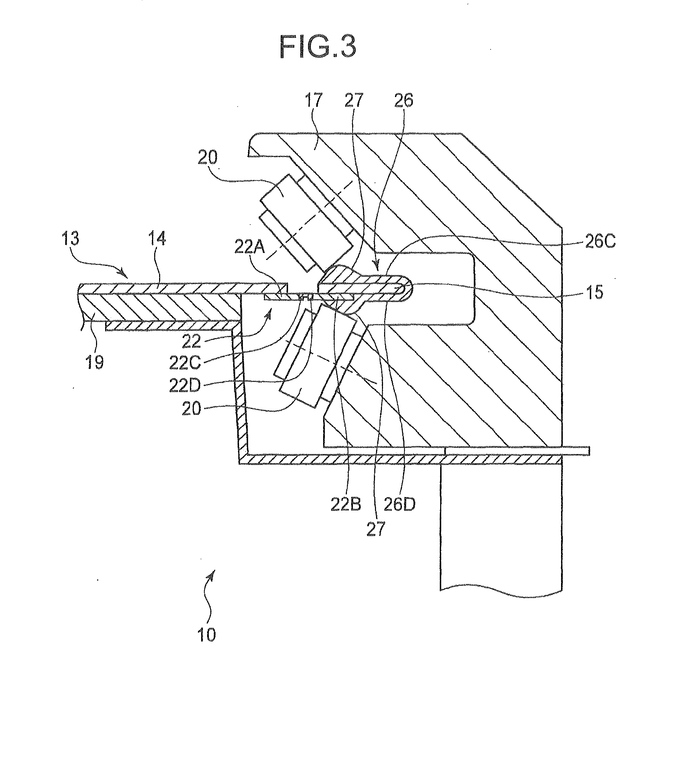

Both ends 14A and 14B of a belt body 14 having the sector form (refer to Fig. 2) are jointed so that the curved conveyor belt 13 is formed into an endless loop. In this embodiment, the ends 14A and 14B are detachably joined together by a first slide fastener 21. Furthermore, the top surface of the curved conveyor belt 13 is a conveying surface on which a conveyor article is placed, and the back surface is one that makes contact with the pulleys 11 and 12 and a support plate 19 (refer to Fig. 3).

Fig. 2 is a plan view of the curved conveyor belt of which both belt ends are separated, viewed from the back surface side. The curved conveyor belt 13 comprises the belt body 14 which is composed by laminating a resin layer onto a fabric, for example, and a detachable belt edge 15 which composes the outer circumferential edge of the curved conveyor belt 13 and is capable of separating from the belt body 14 . The detachable belt edge 15 extends in an arc along the outer circumference of the belt body 14, and is formed of the same materials and thickness as those of the belt body 14.

A bead 26 formed of synthetic resin and so on, having higher elasticity than the detachable belt edge 15, is mounted to the detachable belt edge 15. The bead 26 extends in an arc along the detachable belt edge 15 (namely, the outer circumferential edge of the belt 13). The bead 26 is detachably attached to the outer circumference of the belt body 14 by a second slide fastener 22 together with the detachable belt edge 15.

The first slide fastener 21 is a so-called "zipper", and it comprises a pair of fastener tapes 21A and 21B formed of a known fabric and so on; fastener elements 21C and 21D that are mounted to the fastener tapes 21A and 21B, respectively, and that engage each other so as to close the fastener 21; and a slider 21E that opens or closes the fastener 21 by the sliding movement. The fastener tapes 21A and 21B extend in the width direction of the belt 13 (namely, in a radial direction of the belt body 14) along the ends 14A and 14B, respectively, of the belt body 14. The fastener tapes 21A and 21B are for example sewn and mounted to the back surface of the ends 14A and 14B.

The second slide fastener 22 comprises a pair of fastener tapes 22A and 22B, fastener elements 22C and 22D, and a slider 22E, similar to those of the first slide fastener 21. One fastener tape 22A extends in an arc along the outer circumference of the belt body 14 and is mounted to the back surface of the outer circumference. The other fastener tape 22B is mounted to the back surface of the inner circumferential side of the detachable belt edge 15 (refer to Fig. 3). The fastener tapes 22A and 22B are sewn to the belt body 14 and the detachable belt edge 15.

Fig. 3 is a cross-section view showing the structure of the outer circumferential edge of the belt. The detachable belt edge 15 is disposed inside of the U-shape of the bead 26 whose section is U-shaped in form, and thus is sandwiched by the bead 26 from both the top and back sides. Namely, the bead 26 has a top bead portion 26C that is disposed on the top surface side of the detachable belt edge 15, and a back bead portion 26D that is disposed on the back surface side of the detachable belt edge 15. The top bead portion 26C is flush against the top surface of the detachable belt edge 15, and the portion of the inner circumferential side of the back bead portion 26D is flush against the fastener tape 22B and the portion of the outer circumferential side is flush against the back surface of the detachable belt edge 15. The bead 26 is sewn to the detachable belt edge 15 and the fastener tape 22B.

The parts of bead portions 26C, 26D are formed as swell portions 27 and 27, respectively, which are thicker than other parts. Meanwhile, the belt holder mechanism 17 is provided with ball bearings 20 and 20, and the ball bearings 20 and 20 touch the swell portions 27 and 27, and thereby, the belt outer circumferential edge is held by the belt holder mechanism 17. Furthermore, the support plate 19 is provided on the back surface side of the belt body 14, and the belt body 14 is supported by the support plate 19.

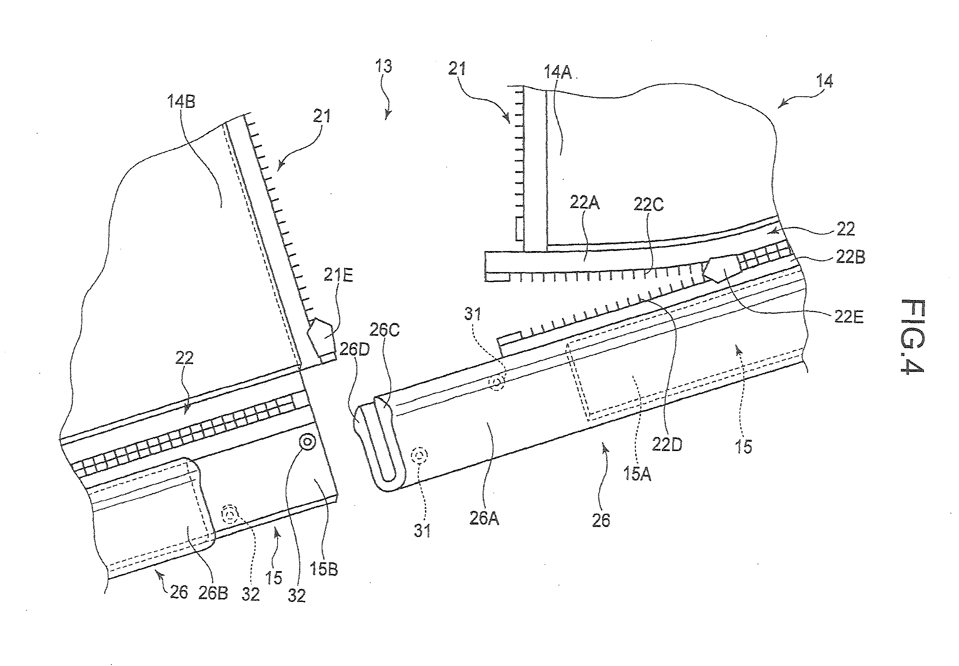

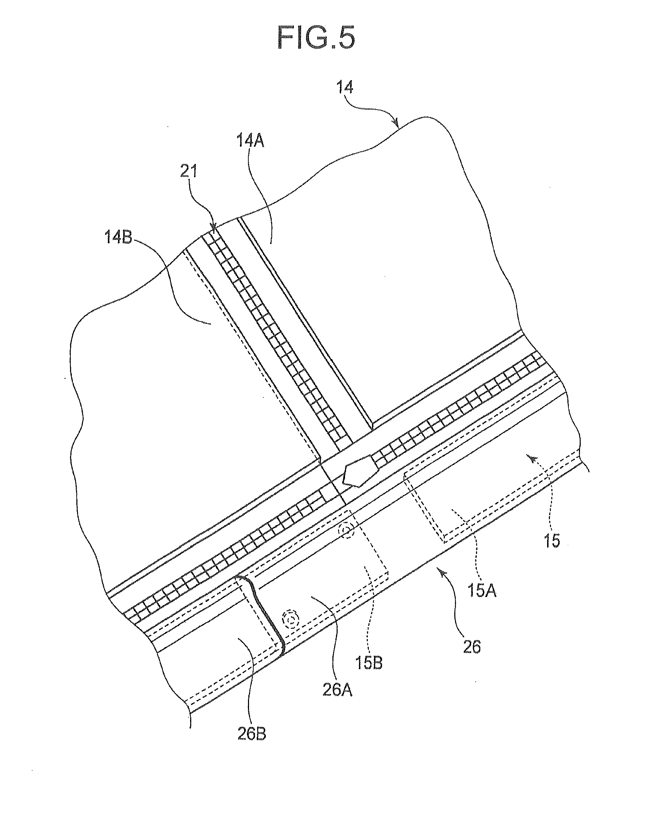

Figs. 4 and 5 are perspective views showing the joining part of ends 14 and 14B and the connecting structure of the belt body 14 and the detachable belt edge 15. As shown in Fugs. 4 and 5, the end faces of the ends 15A and 15B of the detachable belt edge 15 are located on positions which are substantially coincident with the end faces of the ends 14A and 14B of the belt body 14, respectively, in the rotational direction of the endless belt. On the other hand, in the rotational direction of the endless belt, one end 26A of the bead 26 is arranged to protrude from the end faces of ends 14A and 15A, and the end face of the other end 26B of the bead 26 is arranged to be recessed from the end faces of ends 14B and 15B.

Due to the structures of such detachable belt edge 15 and the bead 26, when the ends 14A and 14B are joined by the first slide fastener 21, other end 15B of the detachable belt edge 15 is forced inside one end 26A of the bead 2 6 and sandwiched thereby. At this time, as shown in fig. 5, both ends 26A and 26B of the bead 26, of which end faces adjacently face or connect with each other, are thus contiguously arranged. Namely, the bead member 26 is continuously provided over the entire loop of the endless belt 13 substantially.

A female portion 31 (or male portion) of a snap (namely, a dot button) is provided on each of the back surface of the top bead portion 26C and the top surface of the back bead portion 26D (namely, inside of the U-shape of the bead 26) at the end 26A. In addition, a male portion 32 (or female portion) of the snap is provided on each of the top and back surfaces of the other end 15B of the detachable belt edge 15 at the position corresponding to the female portion 31.

One end 26A of the bead 26 is attached to the other end 15B of the detachable belt edge 15 by interlocking the female portion 31 and male portion 32 together. Namely, the end 26A of the bead 26 that protrudes from the end 14A of the belt body 14 is arranged to extend over the joining part of both ends 14A and 14B, and is detachably attached to the outer circumferential edge of the other belt end (namely, the end 14B) by the snap.

As described above, both ends 14A and 14B of the belt 13 are detachably joined, and therefore, the belt 13 is easily detached from or attached to the conveyor apparatus, even if the support plate is provided on the back surface side of the belt.

Moreover, the bead 26 is also detachable from the belt body 14, and therefore, only the bead 26 (the detachable belt edge 15) can be exchanged without exchanging the whole belt 13, when the bead 26 is broken before the belt body 14. Furthermore, when the bead 26 is exchanged, the belt body 14 does not need to be detached from the conveyor apparatus 10, and therefore, the exchange of the bead 26 can be easily done. Also, when the belt body is broken, only the belt body can be exchanged without exchanging the bead 26.

Furthermore, in this embodiment, the joint between the ends 26A and 26B of the bead 26 is arranged in a different position from the joining part between the ends 14A and 14B of the belt body 14 in the rotational direction of the belt. Accordingly, although the belt 13 and bead 26 are bent to some degree at the joint of the belt body and the joint between the bead ends when the belt is running, the bending at the joint between the bead ends is not enhanced by the bending at the j joining part of the belt body. In this way, the linearity of the bead 26 can be secured easily, and therefore, the bead 26 is easily held by the support mechanism 17, in this embodiment.

In this embodiment, the bead 26 is attached to the attachable belt edge 15 by the snap, but it may be attached by a button other than the snap. For example, while a button is provided on each of the top and back surfaces of the attachable belt edge 15, buttonholes for fastening the buttons may be formed on the bead 26.

Furthermore, the bead 26 is mounted to the detachable belt edge 15, but it may be mounted directly to the fastener tape 22B and the detachable belt edge 15 may be omitted. However, it is better that the detachable belt edge 15 is present in order to secure the strength of the belt's outer circumferential edge. Furthermore, the belt 13 is not limited to the curved conveyor belt, so it may be another type of conveyor belt.

Moreover, the joining part of the belt body 14 between the ends 14A and 14B may be covered by a cover member composed of a fabric and so on, from the top and back surface sides. This cover member is generally mounted to the belt body by bonding its end to one of ends 14A and 14B. The cover member prevents the slide fastener 22 from damaging the conveyor article and the support plate.

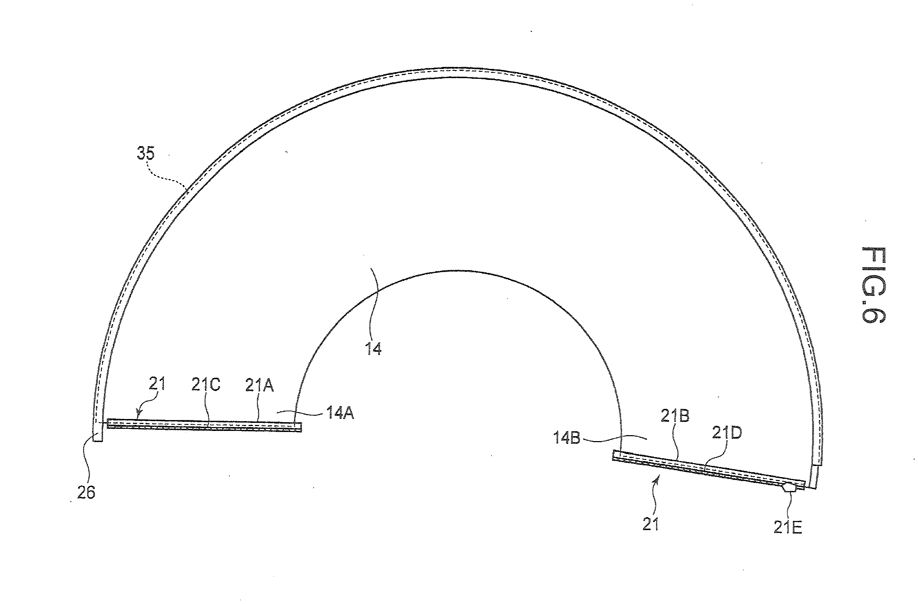

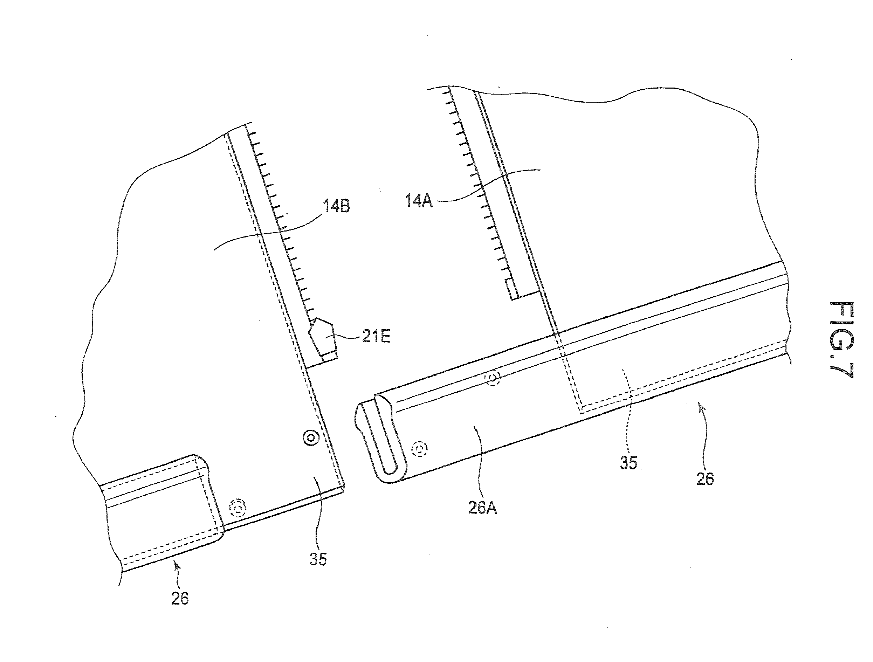

Figs. 6 and 7 are views for explaining a curved conveyor belt in a second embodiment. Next, the differences between the first embodiment and the second embodiment of this invention will be explained using Figs. 6 and 7. In the first embodiment, the bead 26 can be separated from the belt body together with the outer circumferential edge of the belt, so it is detachable from the belt body; however in this embodiment, the bead 26 and the belt body forms one body and therefore the bead 26 is not detachable from the belt body.

Namely, in this embodiment, the second slide fastener is not provided, and the outer circumferential edge 35 of the belt cannot be separated from the belt body. Thus, in this embodiment, the bead 2 6 is mounted to the outer circumferential edge 35 of the belt that cannot be separated from the belt body. One end 26A of the bead 26 protrudes forward from one end 14A of the belt body 14 and is attached to the outer circumferential edge 35 of the other end 14B of the belt body 14, similar to that in the first embodiment. Furthermore, other structures of the bead 26 and the conveyor belt 13 are similar to those in the first embodiment, so the explanations have been omitted.

## Claims

1. A conveyor belt comprising belt ends detachably joined together by a first slide fastener so that the conveyor belt is formed into an endless loop.

2. The conveyor belt as claimed in claim 1, comprising a bead that extends along an edge of the belt.

3. The conveyor belt as claimed in claim 2, wherein one end of said bead is configured to protrude from one of said belt ends, and is attached to said edge of the other one of said belt ends.

4. The conveyor belt as claimed in claim 3, wherein one end of said bead is arranged contiguous to the other end of said bead.

5. The conveyor belt as claimed in claim 3, wherein one end of said bead is detachably attached by a button to said edge of the other belt end.

6. The conveyor belt as claimed in claim 3, wherein one end section of said bead is U-shaped in form, and said edge of the other belt end is disposed inside of the U-shape.

7. The conveyor belt as claimed in claim 2, comprising a belt body of which ends are detachably joined together by said first slide fastener, wherein said bead is detachably attached to said belt body by a second slide fastener.

8. The conveyor belt as claimed in claim 1, wherein the conveyor belt is a curved conveyor belt.

9. A conveyor belt comprising: a belt body and a bead that extends along an edge of said belt body, wherein said bead is detachably attached to said belt body by a slide fastener.
